# EUROPEAN PATENT APPLICATION

(11) **EP 0 672 577 A2**
(43) Date of publication of application: **20.09.1995**
(21) Application number: 95301813.2
(22) Date of filing: 17.03.1995
(51) Int. Cl.: B62D 25/16

(54) **Shielding device**

(30) Priority: 18.03.1994 GB 9405354; 10.02.1995 GB 9502567
(71) Applicant: Strong, Nicholas Maxwell, Birmingham, B45 8HE (GB); Strong, Godfrey, Birmingham B45 8HX (GB)
(72) Inventor: Strong, Nicholas Maxwell, Birmingham, B45 8HE (GB); Strong, Godfrey, Birmingham B45 8HX (GB)
(74) Representative: Dodd, Graham Marshall

(57) **Abstract**

A shield device (23) for a vehicle wheel and mudguard, comprises an attachment portion (24) adapted to be secured to an edge of the mudguard and a shield portion (25) extending from the attachment portion in a direction generally transverse to the rotational axis of the wheel, for constraining spray created by the wheel. The shield portion (25) of the device is preferably of plastics material, and has a lower edge which extends below the rotational axis of the wheel or wheels at which it is fitted.

## Description

### Description of Invention

This invention relates to a shielding device for shielding a wheel or wheels of a motor vehicle, to reduce the amount of spray raised thereby when travelling in wet conditions. It is to be appreciated that when we refer to "vehicles" herein, we mean to include both powered and unpowered vehicles, the latter including both trailers and semi-trailers.

Spray caused by vehicles, particularly commercial vehicles, is a significant driving hazard on motorways and fast roads. Most of such spray is raised by the wheels of vehicles, and the problem is particularly acute in the case of commercial vehicles which have large sizes of wheels, large numbers of wheels, and in many cases mudguards which do not extend sufficiently close to the wheels, nor cover a sufficient part of each wheel, satisfactorily to contain spray. Expedients such as providing the edges of mudguards with brush formations or the like for spray containment assist but are not wholly satisfactory.

It is broadly the object of the present invention to provide for a reduction in the above described problem of emission of spray by vehicles. The invention is particularly applicable to, and is described hereinafter in relation to commercial vehicles, but it will be appreciated that it is more widely applicable to vehicles of all types.

According to one aspect of the present invention, we provide a shield device for a vehicle wheel and mudguard, the device comprising an attachment portion adapted to be secured to an edge of the mudguard and a shield portion extending from the attachment portion in a direction generally transverse to the rotational axis of the wheel for constraining spray created by the wheel.

According to another aspect of the invention, we provide a vehicle having a shielding device according to the invention fitted at least at one wheel of the vehicle.

Preferably the shielding portion of the device has a lower edge which lies below the rotational axis of the wheel or wheels at which it is fitted, for all positions of the wheel relative to the vehicle which are likely to be encountered in normal use of the vehicle.

It would be within the scope of the invention for at least the shield portion of the device to be of a transparent plastics material, so as not to prevent visual inspection of the wheel, but conveniently the material is an opaque plastics material such as is used for the mudguards of commercial vehicles. By way of example, the material may be high density polyethylene, and may be coloured black to match the mudguards which usually are this colour on commercial vehicles. Preferably the attachment portion is in the form of a flange extending in a direction to be attached to a flange at the edge of the mudguard.

There are many different arrangements of mudguards used on commercial vehicles, and a device according to the present invention will be of a different form according to the type of mudguard with which it is to be used.

In one type of mudguard commonly used for non-steerable wheels of commercial vehicles, the mudguard is generally in the form of part of a cylinder whose dimensions are selected so as to follow the profile of part of the periphery of the tyre, with sufficient clearance to allow for suspension movement in use. The edge of the mudguard is provided with an inwardly directed flange, extending more or less parallel to the side of the wheel, i.e. generally perpendicular to the axis of rotation of the wheel.

In this case, the attachment portion of the shield device according to the invention preferably is shaped so as to lie in face-to-face engagement with the flange of the mudguard and to be secured thereto. Thus the attachment portion is generally of arcuate shape so as to conform to the shape of the flange of the mudguard as viewed in a direction parallel to the axis of rotation of the wheel.

The shielding portion of the device preferably extends from the attachment portion thereof so as to lie, when the device is in use, generally parallel to the side of the wheel with sufficient clearance therefrom to allow for wheel movement in use. Preferably the shield portion of the device is offset from the attachment portion, to provide sufficient wheel clearance.

The attachment portion of the device may be secured to the mudguard by use of fasteners, for example bolts or self-tapping screws engaging such parts, or quick-release fasteners of any appropriate type. The mudguard may be provided with retaining elements, which conveniently are in the form of suitably shaped brackets, which are so positioned that the attachment portion of the device is able to be engaged therewith upon upward movement of the device relative to the mudguard. Then, it is necessary further to provide suitable fastening means, e.g. fasteners as above referred to, for retaining the device in a position where it is in engagement with the retaining elements.

As above referred to, preferably the shielding portion of the device extends to shield, in normal wheel positions, at least the upper half of the wheel, i.e. the shielding portion extends to a level which is below the axis of rotation of the wheel in normal conditions of use.

The shielding portion preferably is shaped so that the portion thereof which is closest to the front of the vehicle is lower than the portion thereof which is closest to the rear of the vehicle, i.e. the shielding portion has an inclined lower edge. However, it would alternatively be possible for a lower edge of the shield portion of the device to be generally horizontal, so that a single configuration of device would be suitable for use on both sides of a vehicle.

It has been found that an improvement in the shielding performance of a device according to the invention is obtained if the lower edge of the shielding portion of the device is arranged to extend downwardly as it extends towards the front of the vehicle. To avoid the necessity of providing specific embodiments of the device for fitting respectively at the left hand side and right hand side of the vehicle, the device may be arranged that its lower edge portion is able to be trimmed,e.g. cut, to an appropriate configuration according to whether it is to be fitted at the right or left side of the vehicle. An embodiment of the device for use in this way is described hereafter.

Another type of mudguard commonly found on multiple-axled vehicles is generally in the form of a trough which covers the wheels on two or possibly even three axles. This type of mudguard generally includes an upper portion which is flat and extends horizontally, i.e. it does not closely conform to the contour of the periphery of the wheels. At front and rear of such portion, there are downwardly extending portions, either arcuate or flat and inclined to the upper portion. A flange is provided at the edge of the entire mudguard.

For use with such mudguards, the attachment portion of a device according to the invention may be straight, extending along an edge of the shielding portion. The attachment portion is preferably in the form of a flange which is offset from the shielding portion of the device.

To fit this form of device to a vehicle, the shielding portion thereof is required to be cut, to enable the attachment portion to be bent to conform to the shape of the front and rear downwardly extending portions of the mudguard.

Reinforcement may be provided in the region of the attachment portion of the device, and preferably also at a lower edge portion of the shielding portion of the device.

Preferably the lower edge of the shielding portion of the device extends either generally horizontally, or inclined downwardly towards the front of the vehicle, below the axes of rotation of the wheels shielded thereby, when the wheels are in positions encountered in normal use.

A further form of mudguard is provided for the steerable wheels of vehicles. In this case, clearance must not only be provided for suspension movement but also for steering movement of the wheels.

For application to the mudguards of steerable wheels of a vehicle, a device according to the invention preferably has an attachment portion and shielding portion generally as above described, but the shield portion has an arcuate boundary to allow for steering movement of the wheel.

The invention will now be described by way of example with reference to the accompanying drawings, of which:-
FIGURE 1 is a perspective view of a vehicle, to the mudguards of which a shielding device according to the invention may be attached;
FIGURE 2 is an exploded perspective view showing the fitment of a first embodiment of shielding device according to the invention to a mudguard of the vehicle;
FIGURES 3 and 4 are respectively side and front elevations of an embodiment of shielding device according to the invention.
FIGURE 5 is a side elevation of a vehicle showing a further mudguard configuration thereof;
FIGURE 6 is a perspective view of an embodiment of shielding device according to the invention, suitable for fitting to the vehicle of Figure 5;
FIGURE 7 illustrates successive stages in the fitting of the shielding device of Figure 6;
FIGURE 8 is a view as Figure 5 showing the shielding device as fitted to the vehicle;
FIGURES 9 and 10 are respectively a side elevation and vertical section through a further vehicle wheel and mudguard fitted with another embodiment of shielding device according to the invention;
FIGURES 11 and 12 are a side elevation and perspective view of the shield device shown in Figures 9 and 10, prior to being fitted to the vehicle.

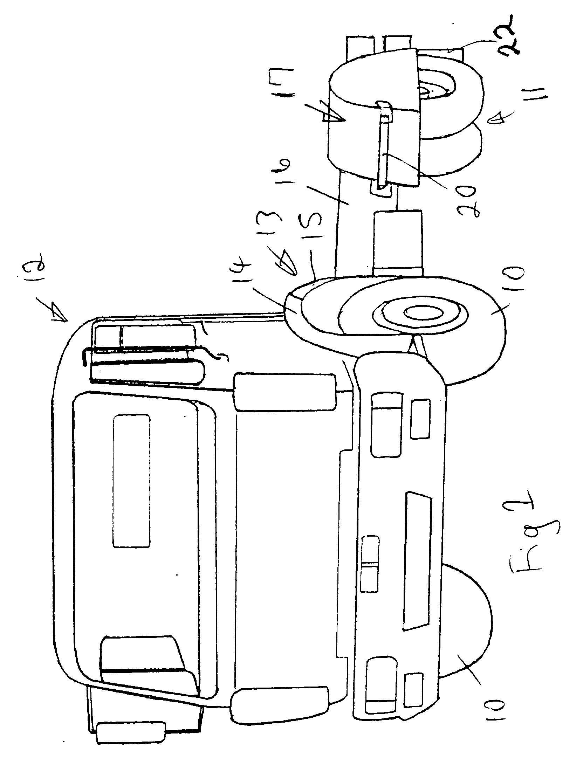

Referring firstly to Figure 1 of the drawings, there is illustrated a vehicle which is a tractor unit for connection to a semi-trailer. It has steerable front wheels 10 and non-steerable double rear wheels as indicated at 11. The vehicle has a cab 12 which is tiltable forwards to provide for access to the vehicle's engine, and a mudguard as indicated generally at 13 for each of the steerable front wheels 10 comprises a portion 14 which is fixed to the cab of the vehicle and tilts therewith and a rear portion 15 which is secured to a chassis 16 of the vehicle.

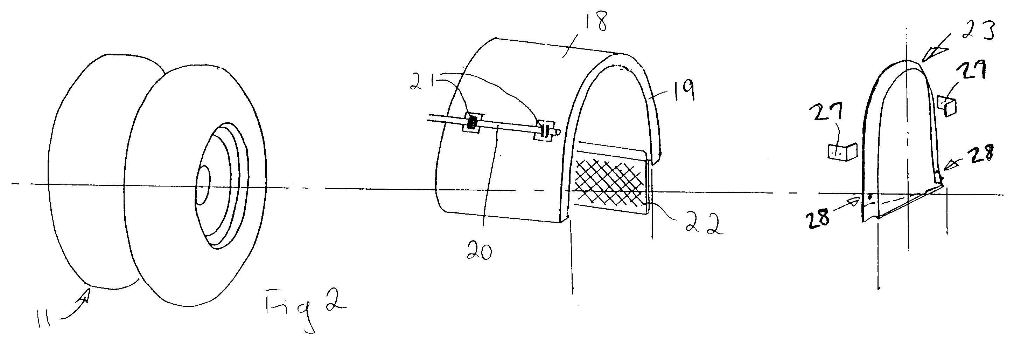

A mudguard 17 for the rear wheel 11 of the vehicle is shown in greater detail in Figure 2. The mudguard 17 comprises a portion 18 which is generally in the form of part of a cylinder whose curvature is selected so as generally to lie parallel to that of the periphery of the tyres on wheel 11, and an inwardly directed flange 19 extending along the outermost edge of the portion 18. The flange 19 extends generally parallel to the side of the wheel 11, i.e. more or less perpendicular to the rotational axis of the wheel 11. The mudguard 17 typically is made of a rubber based material so as to have a degree of flexibility whilst basically retaining its overall shape, and to be able to accept minor impacts without permanent damage.

The mudguard 17 is rigidly mounted to the chassis 16 of the vehicle at a position to provide sufficient clearance for movement of the wheel 11 relative to the chassis as provided by the vehicle's suspension. The mudguard is mounted by forwardly and rearwardly disposed mounting struts, of which the forwardly one is shown at 20, fixed to the chassis of the vehicle so as to extend laterally therefrom and secured to the mudguard by suitable fixing brackets 21. Also shown in Figures 1 and 2 is a mudflap 22 fixed at the rear of the mudguard 17.

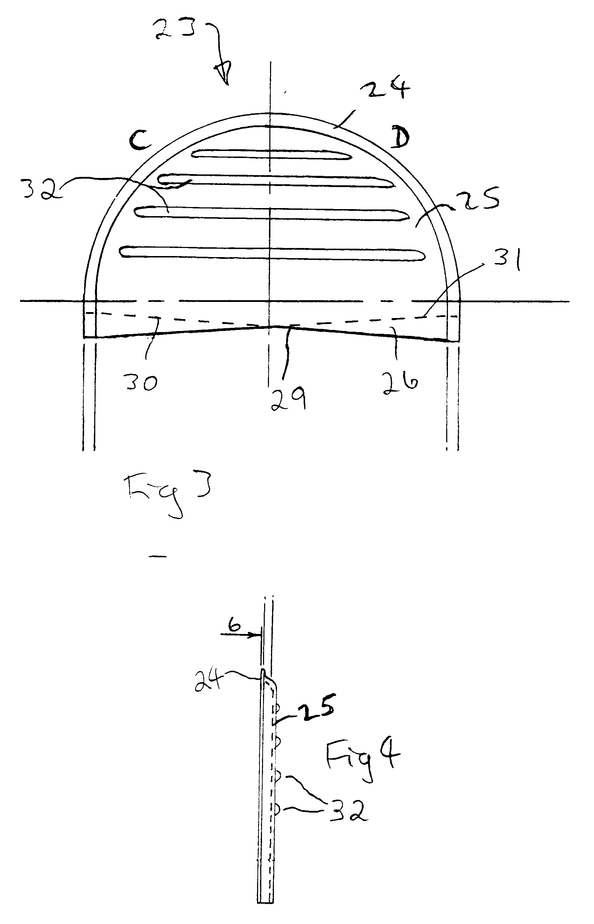

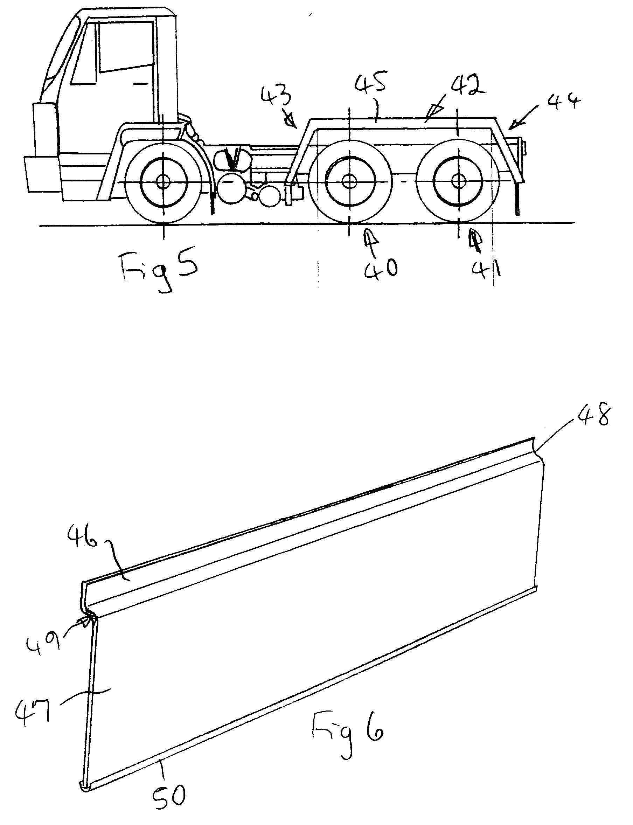

A spray shield device 23, shown in greater detail in Figures 3 and 4, is fitted to the mudguard 18. The shielding device 23 comprises an attachment portion 24 and a shielding portion 25, the shielding portion 25 being in the form of a flat half-circle of material with a short downwards extension 26. The attachment portion 24 is in the form of a flange around the periphery of the portion 25, including the portion 26. The portions 24, 25, are offset from one another as clearly seen in Figure 4.

The shape of the attachment portion 24 of the shielding device 23 is arranged to correspond to that of the flange 19 on the edge of the portion 18 of the mudguard 17, so that the attachment portion 24 can lie in face-to-face abutment with the flange 19. Suitable fasteners, e.g. bolts or self-tapping screws or quickly releasable fasteners of any suitable type, may be passed through the flange 19 and attachment portion 24, to secure the shielding device to the mudguard. Alternatively, as seen in Figure 2, retaining elements 27 in the form of L-shaped brackets are secured to the portion 18 of the mudguard. These are shaped to hold the attachment portion 24 to the flange 19, and are positioned on the mudguard such that the attachment portion 24 of the shield device may be thus held approximately at the positions indicated by C and D in Figure 3. The attachment portion of the shielding device may be engaged with such retaining elements by upward movement of the device relative to the mudguard, and the shielding device may then be secured in position by use of fasteners engaging the mudguard flange and attachment portion of the device at the positions indicated at 28 in Figure 2.

The lowermost edge of the shielding portion 25 of the shield device extends to a position below the axis of rotation of the wheel to whose mudguard it is fitted, in all wheel positions likely to be encountered in normal service of the vehicle, and may extend horizontally but preferably is inclined downwardly, e.g. at an angle of the order of 5° to 10° from the horizontal, from its rearward end to its forward end. The device may be supplied with a lower edge as indicated at 29 with oppositely inclined end portions, to be cut as required as shown by the line 30 or 31 in Figure 3, in continuation of the appropriately inclined end portion, to suit the vehicle to which it is to be fitted and whether it is to be fitted at the left or right hand side of the vehicle. Thus the necessity of providing different forms of shielding device to fit a single vehicle is avoided.

The shielding device may be a plastics material which is transparent, so as not to hinder visual inspection of the wheel to whose mudguard it is attached. Preferably, however, the shielding device is of a plastics material which is opaque and is of an appearance which matches the mudguards of the vehicle to which it is attached. Usually, the mudguards of commercial vehicles are black and of a rubber-based material or a plastics material such as high density polyethylene, and a device according to the invention may be made from such material. Such a material is able to be cut as above referred to, is of adequate strength, and presents an appearance which matches that of the vehicle's mudguards and is readily washed of road dirt. Instead of being black, the shielding device may be of any other colour to match or contrast with the vehicle to which it is fitted.

The shield portion of the device may be provided with reinforcing ribs as indicated at 32 in Figure 3.

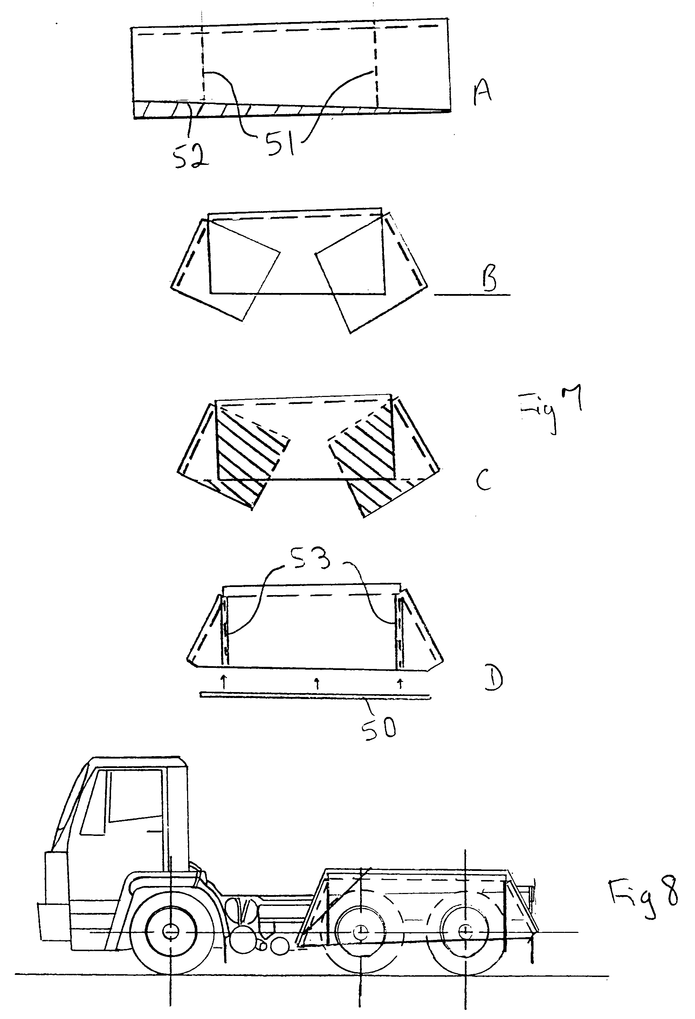

Referring now to Figure 5 of the drawings, this shows a further form of vehicle which has two driven axles with wheels 40, 41. A single mudguard is provided for both the wheels 40, 41, the mudguard comprising an upper portion 42 and downwardly extending portions 43, 44 at front and rear, inclined to the portion 42. A flange 45 extends downwardly from the edge of all the portions 42, 43, 44. As such mudguards do not conform closely to the shape of the wheels guarded, it will be appreciated that spray containment thereby is relatively inefficient.

A shielding device for such a mudguard may be similar to that shown in Figures 3 and 4, but elongated to suit the dimensions of the mudguard.

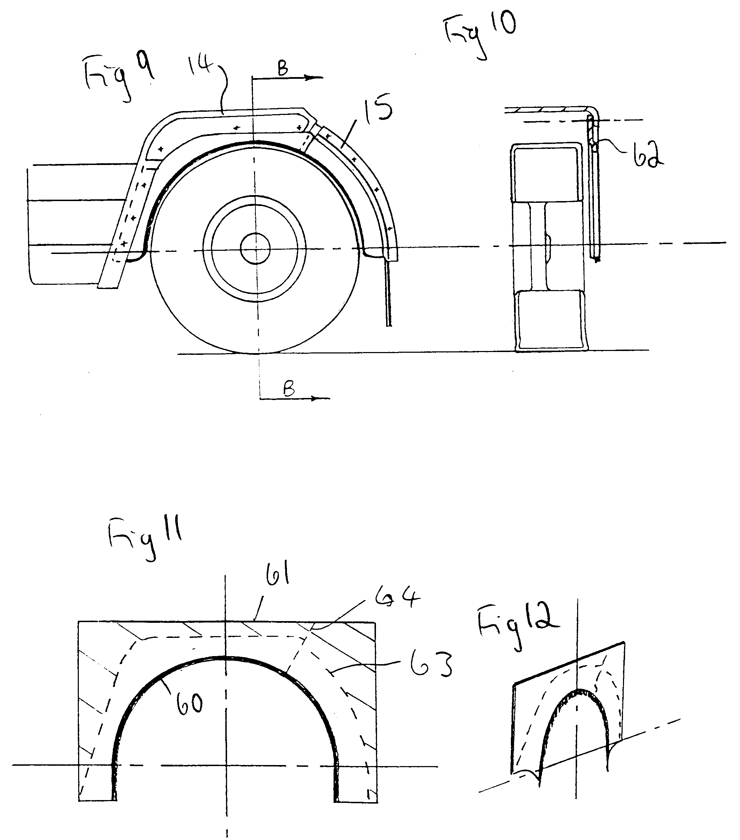

Figure 6 shows another embodiment of a shielding device according to the invention for use with a mudguard as above described. The device comprises an attachment portion 46 in the form of a flange offset from a shielding portion 47, the device being made from a plastics material of sufficient thickness to have the required strength. A metal, e.g. aluminium, reinforcement strip 48 is provided in a transition portion 49 between the portions 46, 47. Also shown in Figure 6 is a reinforcement member 50 along the lower edge of the portion 47, which is fitted as described hereafter. The height of the shielding portion 47 is sufficient to enable the lower edge thereof to lie below the rotational axes of the wheel 40,41, for normal conditions of suspension movement in use of the vehicle.

The stages in the fitting of a shielding device as shown in Figure 6 to a mudguard as described in relation to Figure 5 is shown in Figure 7. Firstly, as shown in Figure 7A, the portion 47 is cut vertically as indicated by the lines 51 spaced according to the length of the portion 42 of the mudguard. The lower edge of the shielding portion 47 may also be cut at this stage, if required, as indicated at 52.

Next, the end portions of the device are bent downwardly about the reinforcement strip 48, as shown in Figure 7B, to an angle corresponding to the inclination of the portions 43, 44 of the mudguard. Excess material from the downwardly bent end portions of the shielding device, as shown shaded in Figure 7C, can then be removed and discarded.

The remaining parts of the downwardly bent regions of the shield portion 47 of the device can then be secured to the portion therebetween, by fusion or solvent welding along the lines indicated at 53 in Figure 7D. The reinforcement 50 along the bottom edge of the device can then be fitted and secured either by mechanical fastenings or possibly by adhesive and/or welding.

Figure 8 shows the vehicle of Figure 5 with the shield device fitted. It will be noted that the device provides a substantial enclosure of the wheels 40, 41 thereby effectively to contain spray raised thereby.

Referring finally now to Figures 9 to 12 of the drawings, these show a further embodiment of shielding device according to the invention, for use for the mudguard as 13 for one of the front steerable wheels of a vehicle. Figures 11 and 12 show the device, which is of plastics material as referred to above, with an edge 60 which is predominantly arcuate so as to conform substantially to the periphery of the tyre on the wheel 10, and an edge 61 which is part-rectangular. Adjacent the edge 60, the device has an offset flange as indicated at 62 in Figure 10 (where the device is shown in position).

The portion of the device near the edge 61 thereof constitutes an attachment portion, and is intended to be cut as indicated by the broken line 63 in Figure 11, to conform to the contour of the mudguard portions 14, 15 of the vehicle. If the vehicle has a tiltable cab such that the part 14 of the mudguard moves away from the part 15, the device would also be cut as indicated by the line 64. The remaining attachment portion of the device is then attached, by fastening elements such as nuts and bolts or self-tapping screws, to the mudguard parts 14, 15 to provide a shield which extends, more closely than the mudguard 14,15, to the periphery of the wheel 10 to constrain spray raised thereby.

The features disclosed in the foregoing description, or the following claims, or the accompanying drawings, expressed in their specific forms or in terms of a means for performing the disclosed function, or a method or process for attaining the disclosed result, as appropriate, may, separately or in any combination of such features, be utilised for realising the invention in diverse forms thereof.

## Claims

1. A shield device for a vehicle wheel and mudguard, the device comprising an attachment portion adapted to be secured to an edge of the mudguard and a shield portion extending from the attachment portion in a direction generally transverse to the rotational axis of the wheel for constraining spray created by the wheel.

2. A shield device according to Claim 1 wherein the attachment portion is in the form of a flange extending in a direction to be attached to a flange at the edge of the mudguard.

3. A device according to Claim 2 wherein the shield portion of the device is offset from the attachment portion thereof.

4. A device according to any one of the preceding claims wherein at least the lower edge of the shield portion is adapted to be trimmed to a desired configuration.

5. A device according to Claim 4 wherein said lower edge includes oppositely inclined end portions.

6. A vehicle having a shielding device according to any one of the preceding claims fitted at at least one wheel thereof.

7. A vehicle according to Claim 6 wherein the shield portion of the device has a lower edge which lies below the rotational axis of the wheel or wheels at which it is fitted, for all normal positions of the wheel relative to the vehicle.

8. A vehicle according to Claim 6 or Claim 7 wherein a mudguard of the vehicle has an inwardly directed flange at its edge extending generally perpendicular to the axis of rotation of the wheel, and wherein the attachment portion of the shield device lies in face-to-face engagement with said flange and is secured thereto.

9. A vehicle according to Claim 8 wherein the attachment portion of the device is secured to the mudguard by fasteners.

10. A vehicle according to any one of Claims 6 to 9 wherein a part of the shield portion of the device which is closest to the front of the vehicle, is lower than a portion of the shield portion of the device which is closest to the rear of the vehicle.

11. A vehicle according to Claim 10 wherein a lower edge of the shield portion of the device is inclined downwardly from the end thereof at the rear of the vehicle to the end thereof at the front of the vehicle.

12. A method of fitting a device according to Claim 4 or Claim 5 to a vehicle mudguard, comprising trimming at least said lower edge of the shield portion of the device to a configuration such that when fitted a part of said portion which is to be closest to the front of the vehicle is lower than a part of said portion to be closes to the rear of the vehicle, and fitting the attachment portion of the device to the mudguard in such manner.

13. A method according to Claim 12 as appendant to Claim 5 comprising trimming said lower edge generally in continuation of an appropriate one of said inclined end portions thereof.
